# EUROPÄISCHE PATENTSCHRIFT

(11) **EP 3 720 704 B1**
(45) Veröffentlichungstag und Bekanntmachung des Hinweises auf die Patenterteilung: **15.09.2021**
(21) Anmeldenummer: 18812028.1
(22) Anmeldetag: 23.11.2018
(51) Int. Cl.: B32B 17/10, B32B 3/06, E04B 2/92, E04B 2/96, E04F 13/15

(54) **VERKLEIDUNGSELEMENT**
LINING ELEMENT
ÉLÉMENT D'HABILLAGE

(30) Priorität: 05.12.2017 AT 510082017
(43) Veröffentlichungstag der Anmeldung: 14.10.2020
(73) Patentinhaber: Feuerhuber, Richard, 4541 Adlwang (AT)
(72) Erfinder: Feuerhuber, Richard, 4541 Adlwang (AT)
(74) Vertreter: Hübscher & Partner Patentanwälte GmbH
(86) Internationale Anmeldenummer: PCT/AT2018/050024
(87) Internationale Veröffentlichungsnummer: WO 2019/109115

(56) Entgegenhaltungen:
- AT-B1- 518 542

## Beschreibung

### Technisches Gebiet

Die Erfindung bezieht sich auf ein Verkleidungselement mit einem Verbundkörper aus zwei rechtwinkeligen Decklagen, von denen zumindest die äußere Decklage aus Glas besteht, und aus einer zwischen den beiden Decklagen einlaminierten Einlage, wobei der Verbundkörper auf zwei einander gegenüberliegenden Randseiten zwischen der inneren Decklage und der Einlage einlaminierte Befestigungslaschen und auf einer der beiden Randseiten zwischen den Befestigungslaschen ein über die innere Decklage vorstehendes Randabschlussprofil umfasst, das einen vom vorstehenden Längsrand abstehenden Anschlusssteg für ein baugleiches Verkleidungselement bildet.

### Stand der Technik

Um Verkleidungselemente für Fassaden, Wände und dgl. so auszugestalten, dass nicht nur eine vielfältige dekorative Ausgestaltung zugelassen wird, sondern auch die Festigkeits- und Sicherheitsanforderungen erfüllt werden können, ist es bekannt (AT 518 542 B1), zwischen zwei Decklagen, von denen zumindest die äußere Decklage aus Glas besteht, eine Einlage mithilfe von Laminierfolien einzulaminieren, sodass in Verbindung mit einem Randabschlussprofil auf der einen Seite und einer zwischen den Decklagen auf der gegenüberliegenden Seite vorgesehenen Verbindungsleiste ein Verbundkörper erhalten wird, der durch zwischen der inneren Decklage und der Einlage einlaminierte Befestigungslaschen an den quer zum Randabschlussprofil und zur Verbindungsleiste verlaufenden Rändern an einem tragenden Gerüst befestigt werden kann. Nachteilig ist allerdings, dass beispielsweise die Witterungsbeständigkeit von der Sorgfalt abhängt, mit der durch die Laminierfolien eine durchgehende, stoffschlüssige Verbindung zwischen den einzelnen Lagen auch entlang des Umfangs des Verbundkörpers hergestellt werden muss.

### Darstellung der Erfindung

Der Erfindung liegt somit die Aufgabe zugrunde, ein Verkleidungselement, das einen Verbundkörper aus einer zwischen zwei Decklagen einlaminierten Einlage bildet, so auszugestalten, dass eine wenig aufwendige, witterungsbeständige Konstruktion gewährleistet werden kann, ohne auf eine einfache Montage verzichten zu müssen.

Ausgehend von einem Fassadenelement der eingangs geschilderten Art löst die Erfindung die gestellte Aufgabe dadurch, dass die dem Randabschlussprofil gegenüberliegende Randseite durch eine stirnseitig von der äußeren Decklage übergriffene Deckleiste abgedeckt ist, die wie das Randabschlussprofil zwischen der inneren Decklage und der Einlage einlaminiert ist, und dass die Befestigungslaschen eine die Stirnseiten der Einlage und der äußeren Decklage abdeckende Abschlussleiste aufweisen.

Durch die auf der dem Randabschlussprofil gegenüberliegenden Seite des Verbundkörpers stirnseitig vorgesehene Deckleiste werden die dieser Deckleiste zugekehrten Stirnseiten der Einlage und der inneren Decklage abgedeckt, sodass auf dieser Seite des Verbundkörpers lediglich die Stirnseite der äußeren Decklage frei liegt, weil diese äußere Decklage aus Glas die Deckleiste mit der Wirkung übergreift, dass im Stoßbereich zwischen zwei baugleichen Verkleidungselementen dieser Art lediglich der stirnseitige Längsrand des Randabschlussprofils des anschließenden Verkleidungselements in Erscheinung tritt, weil ja der die Deckleiste übergreifende Rand der äußeren Decklage aus Glas unmittelbar an das Randabschlussprofil des in einer Reihe von Verkleidungselementen folgenden Verkleidungselements anschließt.

Mithilfe der an den Befestigungslaschen vorgesehenen Abschlussleisten werden auch die von den Befestigungslaschen nicht abgedeckten Stirnseiten der Einlage und der äußeren Decklage abgedeckt, sodass ein Verbundkörper erhalten wird, der umfangsseitig eine witterungsbeständige Abdeckung insbesondere der mithilfe von Laminierfolien gebildeten Verbindungsschichten zwischen den beiden Decklagen und der Einlage aufweist.

Um hinsichtlich des Verbindungsstoßes zwischen zwei Verkleidungselementen im Bereich des Randabschlussprofils vorteilhafte Konstruktionsverhältnisse zu schaffen, kann der die Deckleiste übergreifende Rand der äußeren Decklage über die Deckleiste vorstehen. Verjüngt sich das Randabschlussprofil vom Anschlusssteg zum gegenüberliegenden Längsrand hin entsprechend dem Überstand der äußeren Decklage gegenüber der Deckleiste, so kann das den oberen Rand des Verbundkörpers bildende Randabschlussprofil vorteilhaft als Spritzwasserschutz dienen. Durch den in diesem Fall nach oben abstehenden Anschlusssteg wird verhindert, dass Wasser durch den horizontalen Verbindungsstoß hinter die Verkleidungselemente gelangt. Das in den Verbindungsstoß eindringende Wasser wird vielmehr zufolge des sich verjüngenden und damit nach außen abfallenden Randabschlussprofils wieder nach außen abgeleitet.

Verlaufen die durch die Abschlussleisten der Befestigungslaschen abgedeckten Stirnseiten des Verbundkörpers gegenüber den Decklagen geneigt, so ergibt sich in einfacher Weise eine Stoßfugenüberdeckung senkrecht zu den Decklagen, ohne hierfür gesonderte Vorkehrungen treffen zu müssen.

Um beim Einlaminieren der Befestigungslaschen den Auszugswiderstand parallel zu den Decklagen zu vergrößern, können die Befestigungslaschen einen zwischen die innere Decklage und die Einlage ragenden, mit Durchbrechungen versehenen Laminiersteg aufweisen. Die durch entsprechende Laminierfolien gebildete Verbindungsschicht durchdringt die Durchbrechungen und bedingt dadurch gewissermaßen einen Formschluss gegenüber dem Laminiersteg. In ähnlicher Weise können die Deckleiste und das Randabschlussprofil einen zwischen die innere Decklage und die Einlage ragenden, mit hinterschnittenen Randaussparungen versehenen Laminiersteg zur Vergrößerung des Ausziehwiderstands aufweisen.

### Kurze Beschreibung der Erfindung

In der Zeichnung ist der Erfindungsgegenstand beispielsweise dargestellt. Es zeigen
- Fig. 1: ein als Wandverkleidung eingesetztes Verkleidungselement nach der Erfindung in einem vereinfachten Vertikalschnitt,
- Fig. 2: dieses Verkleidungselement in einem Schnitt nach der Linie II-II und

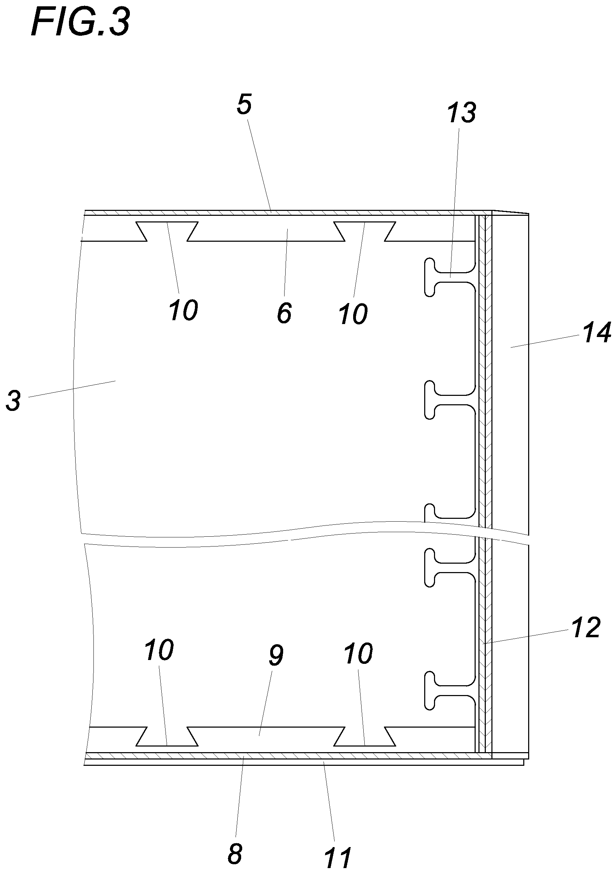

- Fig. 3: einen Schnitt nach der Linie III-III der Fig. 1

### Wege zur Ausführung der Erfindung

Ein erfindungsgemäßes Verkleidungselement umfasst zwei rechtwinkelige Decklagen 1, 2 sowie eine zwischen den Decklagen 1, 2 eingeschlossene Einlage 3, die einlagig dargestellt ist, aber auch mehrlagig ausgebildet sein kann. Von den beiden Decklagen 1, 2 ist zumindest die äußere Decklage 1 aus Glas gefertigt. Die innere Decklage 2 kann aus unterschiedlichem Material bestehen, wird im Allgemeinen aber auch durch eine Glasscheibe gebildet werden. Die Verbindung zwischen den beiden Decklagen 1, 2 und der Einlage 3 erfolgt über Laminierfolien 4, die vorzugsweise zwei- oder mehrlagig zwischen der Einlage 3 und den beiden Decklagen 1, 2 vorgesehen werden.

Auf einer Randseite, vorzugsweise auf einem Längsrand, wird der durch die beiden Decklagen 1, 2 und durch die dazwischen einlaminierte Einlage 3 gebildete Verbundkörper durch ein Randabschlussprofil 5 abgeschlossen, das mit einem Laminiersteg 6 zwischen die Decklagen 1, 2 greift und einen lagenparallel abstehenden Anschlusssteg 7 für ein baugleiches Verkleidungselement bildet. Auf der dem Randabschlussprofil 5 gegenüberliegenden Randseite des Verbundkörpers ist eine Deckleiste 8 vorgesehen, die mit einem Laminiersteg 9 wie das Randabschlussprofil 5 zwischen der inneren Decklage 2 und der Einlage 3 einlaminiert ist. Zur besseren Verankerung in der durch die Laminierfolien 4 unter Druck/Vakuum und Hitze erhaltenen Verbindungsschicht sind die Laminierstege 6, 9 mit hinterschnittenen Randaussparungen 10 versehen. Da die Laminierstege 6, 9 zwischen zwei Laminierfolien 4 zu liegen kommen, werden das Randabschlussprofil 5 und die Deckleiste 8 beim Aushärten der Laminierfolien 4 unter einer Anbindung sowohl an die innere Decklage 2 als auch an die Einlage 3 zwischen den Laminierfolien 4 formschlüssig einlaminiert.

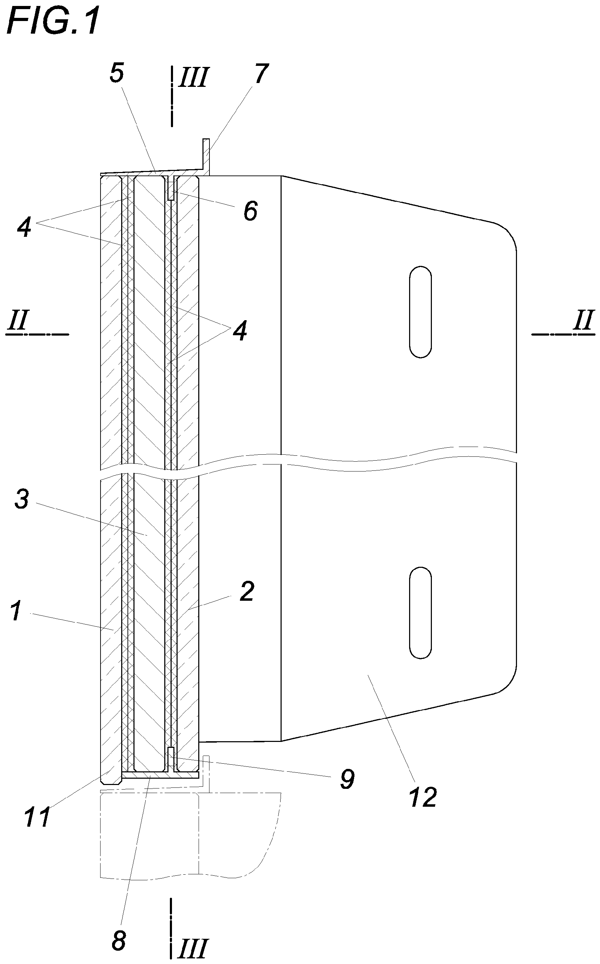

Zum Unterschied zum Randabschlussprofil 5 erstreckt sich die Deckleiste 8 jedoch nur über die innere Decklage 2 und die Einlage 3 und wird von der äußeren Decklage 1 mit einem geringfügigen Überstand 11 übergriffen, wie dies insbesondere der Fig. 1 entnommen werden kann. Obwohl sich die Deckleiste 8 nur bis zur äußeren Decklage 1 aus Glas erstreckt, werden insbesondere die sich durch die Laminierfolien 4 ergebenden Verbindungsschichten zwischen den beiden Decklagen 1, 2 und der Einlage 3 durch die stumpf an die äußere Deckscheibe 1 anstoßende Deckleiste 8 abgedeckt.

Zur Befestigung des Verkleidungselements weist der Verbundkörper auf zwei einander gegenüberliegenden, quer zum Randabschlussprofil 5 verlaufenden Randseiten Befestigungslaschen 12 auf, die aus einem abgewinkelten Blechprofil bestehen und mit einem durchbrochenen Laminiersteg 13 in den Zwischenraum zwischen der inneren Decklage 2 und der Einlage 3 eingreifen, um wie das Randabschlussprofil 5 und die Deckleiste 8 einlaminiert zu werden. Die zur Befestigung des Verkleidungselements an einem Gerüst über die innere Decklage 2 vorstehenden Befestigungslaschen 12 decken allerdings nur die innere Decklage 2 stirnseitig ab. Aus diesem Grund werden die Befestigungslaschen 12 mit einer Abschlussleiste 14 versehen, die die Stirnseiten der Einlage 3 und der äußeren Decklage 1 abdeckt, sodass der Verbundkörper auf allen Umfangsseiten mit einer witterungsbeständigen Abdeckung versehen ist, die weder das Erscheinungsbild des Verkleidungselements beeinträchtigt noch Einfluss auf die Funktion ausübt.

Wie der Fig. 1 entnommen werden kann, kann auf ein bereits an einem Gerüst befestigtes, strichpunktiert angedeutetes Verkleidungselement ein baugleiches Verkleidungselement angesetzt und wieder mit dem Gerüst verbunden werden, beispielsweise durch ein Festschrauben der Befestigungslaschen12, die zu diesem Zweck mit Langlöchern versehen sein können. Es zeigt sich, dass das bereits befestigte Verkleidungselement mit seinem Randabschlussprofil 5 das Versetzen des neu anzuschließenden Verkleidungselements vereinfacht, weil das Randabschlussprofil 5 mit seinem Anschlusssteg 7 hierfür als Richtanschlag dienen kann. Der die innere Decklage 2 des anschließenden Verkleidungselements nach oben übergreifende Anschlusssteg 7 des Randabschlussprofils 5 bildet außerdem einen Spritzwasserschutz gegenüber durch die Stoßfuge zwischen den Verkleidungselementen eindringendem Wasser, das aufgrund dieses Anschlussstegs nicht auf die Rückseite der Verkleidungselemente gelangen kann.

Verjüngt sich das Randabschlussprofil 5 vom Anschlusssteg 7 zum gegenüberliegenden Längsrand hin und ist das Maß dieser Verjüngung an den Überstand 11 der äußeren Decklage 1 aus Glas angepasst, so bildet das Randabschlussprofil 5 ein Gefälle, das nicht nur für ein Rückfließen des in den Verbindungsstoß eindringenden Wassers sorgt, sondern auch sicherstellt, dass zwischen den äußeren Decklagen 1 zweier der Höhe nach aneinander anschließender Verkleidungselemente lediglich eine durch den Längsrand der Randabschlussprofils 5 bestimmte Stoßfuge verbleibt.

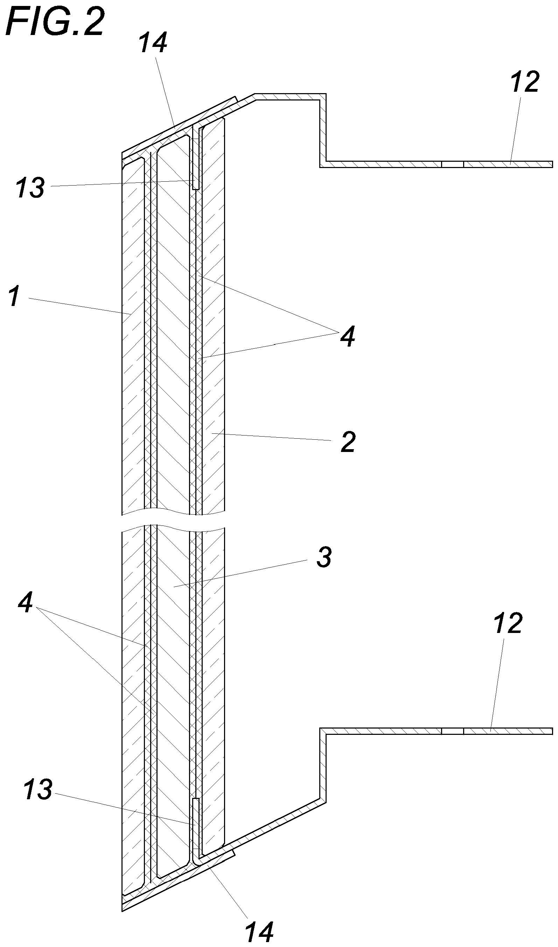

Um eine Überdeckung der sich in vertikaler Richtung ergebenden Stoßfugen senkrecht zur äußeren Decklage 1 zu ermöglichen, ohne den Eindruck einer weitgehend über die einzelnen Verkleidungselemente durchgehenden Glasfassade zu beeinträchtigen, können die parallelen Stirnseiten der Verkleidungselemente im Bereich der Befestigungslaschen 12 gegenüber den Decklagen 1, 2 geneigt verlaufen, wie dies insbesondere der Fig. 2 entnommen werden kann. Diese Neigung der Stirnseiten des Verkleidungselements bedingt eine entsprechende Abkantung der Befestigungslaschen 12, damit im Bedarfsfall eine flächige Anlage der Befestigungslaschen 12 an Befestigungsabschnitten des tragenden Gerüsts erreicht werden kann.

## Patentansprüche

1. Verkleidungselement mit einem Verbundkörper aus zwei rechtwinkeligen Decklagen (1, 2), von denen zumindest die äußere Decklage (1) aus Glas besteht, und aus einer zwischen den beiden Decklagen (1, 2) einlaminierten Einlage (3), wobei der Verbundkörper auf zwei einander gegenüberliegenden Randseiten zwischen der inneren Decklage (2) und der Einlage (3) einlaminierte Befestigungslaschen (12) und auf einer der beiden Randseiten zwischen den Befestigungslaschen (12) ein über die innere Decklage (2) vorstehendes Randabschlussprofil (5) umfasst, das einen vom vorstehenden Längsrand abstehenden Anschlusssteg (7) für ein baugleiches Verkleidungselement bildet, **dadurch gekennzeichnet, dass** die dem Randabschlussprofil (5) gegenüberliegende Randseite durch eine stirnseitig von der äußeren Decklage (1) übergriffene Deckleiste (8) abgedeckt ist, die wie das Randabschlussprofil (5) zwischen der inneren Decklage (2) und der Einlage (3) einlaminiert ist, und dass die Befestigungslaschen (12) eine die Stirnseiten der Einlage (3) und der äußeren Decklage (1) abdeckende Abschlussleiste (14) aufweisen.

2. Verkleidungselement nach Anspruch 1, **dadurch gekennzeichnet, dass** der die Deckleiste (8) übergreifende Rand der äußeren Decklage (1) über die Deckleiste (8) vorsteht und dass sich das Randabschlussprofil (5) vom Anschlusssteg (7) zum gegenüberliegenden Längsrand hin entsprechend dem Überstand (11) der äußeren Decklage (1) gegenüber der Deckleiste (8) verjüngt.

3. Verkleidungselement nach Anspruch 1 oder 2, **dadurch gekennzeichnet, dass** die durch die Abschlussleisten (14) der Befestigungslaschen (12) abgedeckten Stirnseiten des Verbundkörpers gegenüber den Decklagen (1, 2) geneigt verlaufen.

4. Verkleidungselement nach einem der Ansprüche 1 bis 3, **dadurch gekennzeichnet, dass** die Befestigungslaschen (12) einen zwischen die innere Decklage (2) und die Einlage (3) ragenden, mit Durchbrechungen versehenen Laminiersteg (13) aufweisen.

5. Verkleidungselement nach einem der Ansprüche 1 bis 4, **dadurch gekennzeichnet, dass** die Deckleiste (8) und das Randabschlussprofil (5) einen zwischen die innere Decklage (2) und die Einlage (3) ragenden, mit hinterschnittenen Randaussparungen (10) versehenen Laminiersteg (6, 9) aufweisen.

## Claims

1. Cladding element having a composite body formed from two rectangular cover layers (1, 2), of which at least the outer cover layer (1) consists of glass, and from an inlay (3) laminated-in between the two cover layers (1, 2), wherein the composite body comprises, on two mutually opposing edges, fastening tabs (12) laminated-in between the inner cover layer (2) and the inlay (3), and comprises, on one of the two edges between the fastening tabs (12), an edge closure profile (5) protruding beyond the inner cover layer (2), which edge closure profile forms an attachment web (7), standing out from the protruding longitudinal edge, for a cladding element of the same structure, **characterised in that** the edge opposite to the edge closure profile (5) is covered by a cover strip (8) which is overlapped at the end face by the outer cover layer (1) and, like the edge closure profile (5), is laminated-in between the inner cover layer (2) and the inlay (3), and that the fastening tabs (12) comprise a closure strip (14) covering the end faces of the inlay (3) and of the outer cover layer (1).

2. Cladding element as claimed in claim 1, **characterised in that** the edge of the outer cover layer (1) overlapping the cover strip (8) protrudes beyond the cover strip (8) and that the edge closure profile (5) tapers from the attachment web (7) towards an opposing longitudinal edge in a manner corresponding to the projection (11) of the outer cover layer (1) in relation to the cover strip (8).

3. Cladding element as claimed in claim 1 or 2, **characterised in that** the end faces of the composite body covered by the closure strips (14) of the fastening tabs (12) extend in an inclined manner in relation to the cover layers (1, 2).

4. Cladding element as claimed in any one of claims 1 to 3, **characterised in that** the fastening tabs (12) comprise a lamination web (13) protruding between the inner cover layer (2) and the inlay (3) and provided with perforations.

5. Cladding element as claimed in any one of claims 1 to 4, **characterised in that** the cover strip (8) and the edge closure profile (5) comprise a lamination web (6, 9) protruding between the inner cover layer (2) and the inlay (3) and provided with undercut edge recesses (10).

## Revendications

1. Elément de revêtement avec un corps composite constitué de deux couches de revêtement rectangulaires (1, 2), dont au moins la couche de revêtement externe (1) est en verre, et d'une couche intérieure (3) insérée par laminage entre les deux couches de revêtement (1, 2), le corps composite comprenant sur deux bords opposés entre eux des pattes de fixation (12) insérées par laminage entre la couche de revêtement interne (2) et la couche intérieure (3) et sur un des deux bords, entre les brides de fixation (12), un profilé de bordure (5) saillant au-dessus de la couche de revêtement interne (2), qui forme une barrette de raccordement (7) écartée du bord longitudinal saillant pour un élément de revêtement identique, **caractérisé en ce que** le bord opposé au profilé de bordure (5) est recouvert par une baguette de recouvrement (8) chevauchée à l'avant par la couche de revêtement externe (1) qui, comme le profil de bordure (5), est insérée par laminage entre la couche de revêtement interne (2) et la couche intérieure (3), et que les pattes de fixation (12) présentent une baguette de finition (14) recouvrant les faces frontales de la couche intérieure (3) et de la couche de revêtement externe (1).

2. Elément de revêtement selon la revendication 1, **caractérisé en ce que** le bord de la couche de revêtement externe (1) chevauchant la baguette de recouvrement (8) dépasse la baguette de recouvrement (8) et que le profilé de bordure (5) s'amincit de la barrette de raccordement (7) au bord longitudinal opposé de façon identique au dépassement (11) de la couche de revêtement (1) par rapport à la baguette de recouvrement (8).

3. Elément de revêtement selon la revendication 1 ou 2, **caractérisé en ce que** les faces frontales du corps composite recouvertes par les baguettes de finition (14) des pattes de fixation (12) sont inclinées par rapport aux couches de revêtement (1, 2).

4. Elément de revêtement selon les revendications 1 à 3, **caractérisé en ce que** les pattes de fixation (12) présentent une barrette de laminage (13) percée de trous entre la couche de revêtement interne (2) et la couche intérieure (3).

5. Elément de revêtement selon une des revendications 1 à 4, **caractérisé en ce que** la baguette de recouvrement (8) et le profilé de bordure (5) présentent une barrette de laminage (6, 9) dotée d'échancrures périphériques (10) saillant entre la couche de revêtement interne (2) et la couche intérieure (3).
